# EUROPEAN PATENT SPECIFICATION

(11) **EP 4 198 358 B1**
(45) Date of publication and mention of the grant of the patent: **08.05.2024**
(21) Application number: 22214169.9
(22) Date of filing: 16.12.2022
(51) Int. Cl.: F16K 35/02, F16K 31/122, F16K 1/12, F16K 31/383

(54) **PILOT VALVE ASSEMBLY**
PILOTVENTILANORDNUNG
ENSEMBLE SOUPAPE PILOTE

(30) Priority: 17.12.2021 IN 202111058968; 14.12.2022 US 202218065938
(43) Date of publication of application: 21.06.2023
(73) Proprietor: Eaton Intelligent Power Limited, D04 Y0C2 Dublin 4 (IE)
(72) Inventor: VISHWAKARMA, Ashok Kalappa, Dublin, D04 Y0C2 (IE); JUNEJA, Divya, Dublin, D04 Y0C2 (IE); BIRADAR, Pradeep, Dublin, D04 Y0C2 (IE)
(74) Representative: Novagraaf Group

(56) References cited:
- CN-U- 205 806 665
- CN-U- 212 131 314
- CN-U- 214 500 052
- CN-Y- 2 493 784
- US-A1- 2018 073 648

## Description

### Technical Field

The present disclosure relates generally to hydrant valves or shut-off valves commonly used in aircraft fueling. More particularly, the present disclosure relates to a non-detachable pilot valve actuator.

### Background

Ground fueling hydrant pit valves are used for fueling aircrafts. The hydrant valves are typically installed in a hydrant pit below ground level to avoid collision with an aircraft or other vehicle. Hydrant valves are designed to deliver fuel by connecting fuel storage through an underground pipeline to an aircraft via a fueling vehicle equipped with a hydrant valve coupler and a hose system. Hydrant valves can be opened or closed by a fueling operator from a distance.

Hydrant valves are not controlled electromechanically due to concerns of fuel igniting. Pressure, either pneumatic or hydraulic, is typically utilized for controlling the opening and closing of hydrant valves. A quick disconnect pressure fitting can be used to apply the pneumatic or hydraulic pressure to the actuator. Due to the high pressure and flow rates sustained by hydrant valves, most hydrant valves are pilot operated. That is, the main hydrant valve can be opened or closed by actuating a smaller pilot valve installed in the main hydrant valve Document US2018/0073648 A1 discloses a hydrant valve used in aircraft fuelling, the valve having an internal valve that is movable between open and closed positions in response to movement of an upper valve having a biasing member that biases the upper valve toward the closed position. In the closed position the upper valve restricts fluid flow through the outlet. The internal valve is movable between open and closed positions in response to a movement of the upper valve. In the open position the internal valve permits fluid flow between the hydrant chamber and the piston chamber. Document CN212131314 U discloses an intelligent manual fire extinguisher solenoid valve which comprises a base, a manual switch, a valve sealing gasket and a manual switch fixing pressing block, the valve sealing gasket being arranged in the middle of the upper end of the base. Document CN214500052U discloses a straight-through adjustable one-way valve comprising an electromagnetic control box fixedly installed with a pipe flange.

There is a need for a more improved pilot actuator assembly to enhance overall performance that results in less seal failure, contamination, and debris accumulation.

### Summary

The present disclosure relates to an improved pilot valve assembly for a hydrant pit valve according to claim 1.

The pilot valve assembly is designed to block communication between a hydrant chamber and a piston chamber of the hydrant pit valve when a pilot valve of the pilot valve assembly is in a closed position. When air pressure is supplied, the pilot valve assembly can open the pilot valve against a biasing force to permit flow of fluid between the hydrant chamber and the piston chamber of the hydrant pit valve.

The pilot valve assembly includes a poppet that is movable between an open position and a closed position. The poppet has a molded seal with an interlock feature to hold the seal rigidly. An advantageous feature of the molded seal is the decreased risk of delamination which results in less contamination and debris accumulation in the pilot valve assembly. The poppet provides a seal when in the closed position.

The pilot valve assembly also includes a manually operated reset mechanism. The reset mechanism can be horizontally positioned and can function to reset the pilot actuator for the next refueling operation. The horizontal design of the reset mechanism can reduce the overall length of the pilot actuator assembly to help eliminate excessive loads on the pilot valve. The reset mechanism includes a projection that engages the poppet to restrict movement of the poppet when moved to the open position.

A lanyard is connected to the poppet to be used as deactuation mechanism. When the lanyard is pulled, the poppet can be moved to an open position. A mechanical stop can be provided to restrict movement of the poppet connected to the lanyard. The mechanical stop may help to avoid excessive loading on the reset mechanism.

These and other features and advantages will be apparent from a reading of the following detailed description and a review of the associated drawings. A variety of additional aspects will be set forth in the description that follows. The aspects can relate to individual features and to combinations of features. It is to be understood that both the foregoing general description and the following detailed description are exemplary and explanatory only and are not restrictive of the broad concepts upon which the examples disclosed herein are based.

### Brief Description of the Drawings

The accompanying drawings, which are incorporated in and constitute a part of the description, illustrate several aspects of the present disclosure. A brief description of the drawings is as follows:
FIG. 1 illustrates a cross-sectional view of an example hydrant pit valve including a Z-pilot valve assembly in accordance with principles of the present disclosure;
FIGS. 2-3 illustrate schematic views of the hydrant pit valve with the Z-pilot valve assembly of FIG. 1;
FIG. 4 illustrates a perspective view of the Z-pilot valve assembly of FIG. 1;
FIG. 5 illustrates a side view of the Z-pilot valve assembly of FIG. 4;
FIG. 6 is a cross-sectional view taken along line 6-6 of FIG. 5 showing a pilot valve and piston actuator in accordance with the principles of the present disclosure;
FIG. 7 is a plan view of the Z-pilot valve assembly of FIG. 6;
FIGS. 8-10 illustrate the actuation and deactuation process of the Z-pilot valve assembly in accordance with the principles of the present disclosure;
FIG. 11 illustrates an enlarged portion of the Z-pilot valve assembly of FIG. 7 with a reset mechanism in a first position;
FIG. 12 illustrates an enlarged portion of the Z-pilot valve assembly of FIG. 11;
FIG. 13 illustrates a perspective view of a spring-loaded actuator poppet in accordance with the principles of the present disclosure;
FIG. 14 illustrates a lanyard in accordance with the principles of the present disclosure;
FIG. 15 illustrates a cross-sectional view of the Z-pilot valve assembly where the lanyard has been pulled to bias the spring-loaded actuator poppet to an open position to move the reset mechanism in a second position;
FIG. 16 illustrates a cross-sectional view of the Z-pilot valve assembly with the spring-loaded actuator poppet in a closed position and the reset mechanism in the first position;
FIG. 17 is a perspective view of an example actuator body suitable for use with the Z-pilot valve assemblies disclosed herein, the actuator body including one or more flat surfaces to inhibit rotation;
FIG. 18 is a perspective view of a connector body suitable for use with the Z-pilot valve assemblies disclosed herein, the connector body defining an inwardly facing flat edge;
FIG. 19 is a bottom plan view of the actuator body of FIG. 17 mounted to the connector body of FIG. 18;
FIG. 20 is a cross-sectional view of the Z-pilot valve assembly with a cover mounted over the securement end of the lanyard; and

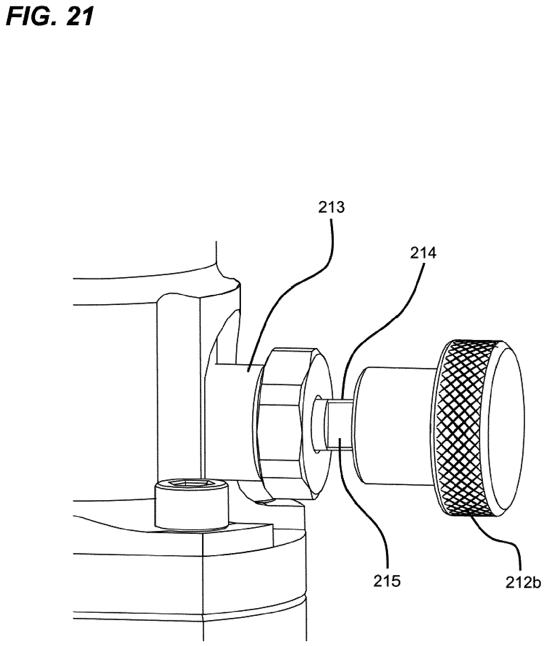

FIG. 21 shows a reset pin suitable for use with the Z-pilot valve assembly, the reset pin having one or more flat surfaces.

### Detailed Description

The present disclosure relates to an improved pilot valve assembly. The advantageous features of the pilot valve assembly include a manual reset feature that includes a spring-loaded horizontal pin to reset the pilot actuator. The horizontal configuration of the reset mechanism reduces the overall dimensions of the pilot actuator assembly to decrease excessive loads on a pilot valve or valve stem of the assembly.

The pilot actuator assembly also has a new poppet sealing design that includes a molded type seal to help improve sealing performance and prevent contamination and debris accumulation in the pilot actuator assembly.

The pilot actuator assembly further includes a lanyard deactuation mechanism designed such that when pulled, a collar of the pilot actuator assembly defines a mechanical stop to limit movement of the poppet connected to the lanyard.

A typical hydrant pit valve may include three basic parts, a lower valve assembly, an upper valve assembly and a pilot valve.

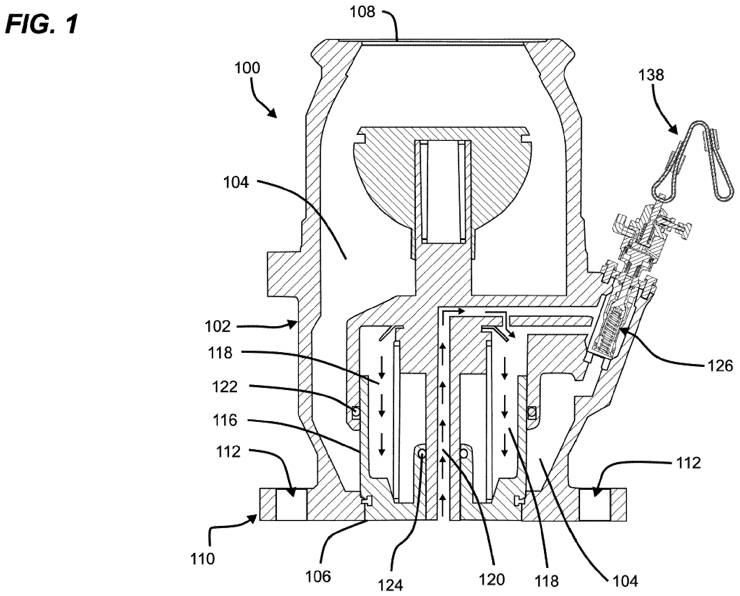

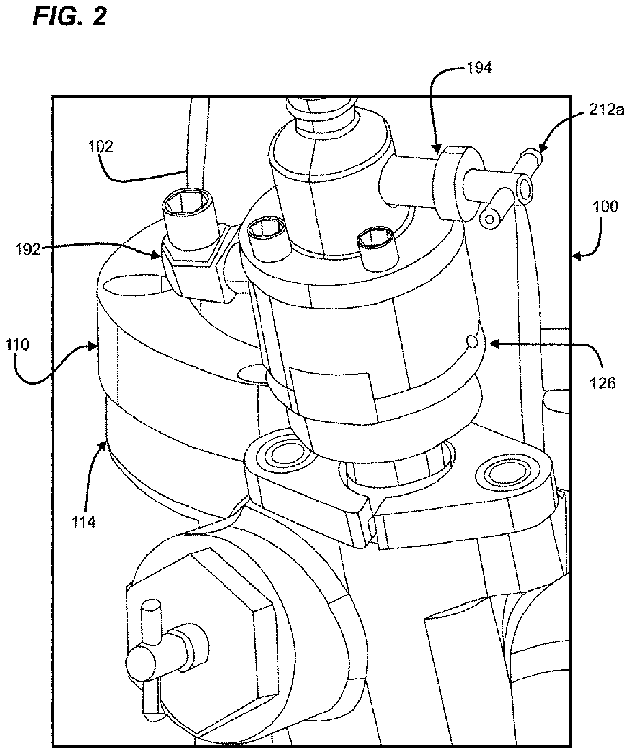

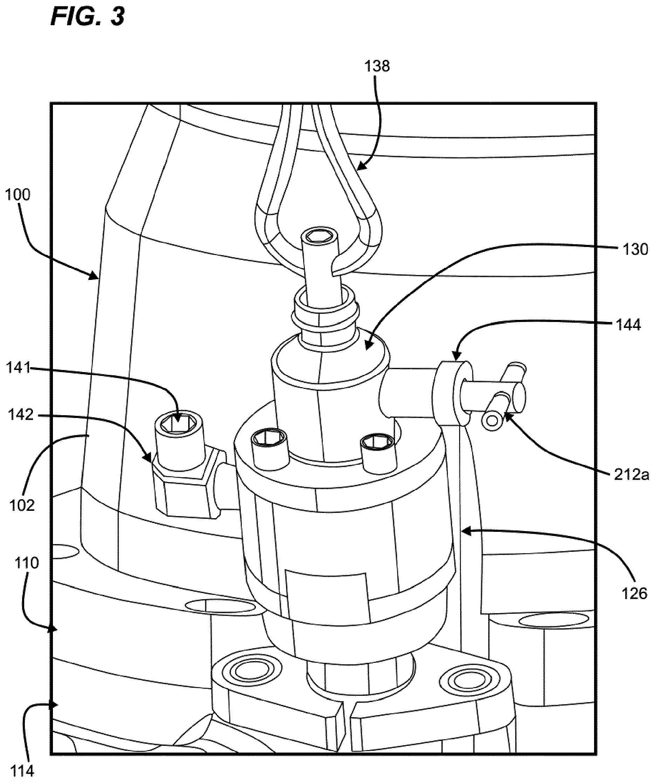

FIG. 1 illustrates an example hydrant pit valve 100 that includes an upper valve assembly or hydrant body 102. The hydrant body 102 defines a hydrant chamber 104 that has an inlet end 106 and an outlet end 108. The hydrant body 102 has a flange 110 that defines openings 112 that can receive fasteners (not shown) for securing the hydrant body 102 to a flange 114 of a lower valve assembly (see FIGS. 2-3) of the hydrant pit valve 100. A fuel supply (not shown) can be supplied to the hydrant chamber 104 through the inlet end 106. A fueling vehicle (not shown) can receive fuel from the hydrant pit valve 100 through the outlet end 108.

The hydrant body 102 may include a piston 116 within the hydrant chamber 104 that is movable between opened and closed positions relative to the inlet end 106. The piston 116 defines a piston chamber 118 that can be in fluid communication with the inlet end 106 through a passageway 120. When the piston 116 is in the closed position, it prevents the flow of fuel through the inlet end 106. The piston chamber 118 can be isolated from the hydrant chamber 104 by seals 122 and 124 and a Z-pilot (i.e., dual pilot) valve 126.

Because the piston chamber 116 can be in communication with the inlet end 106, the pressure within the piston chamber 116 is equalized with the pressure at the inlet end 106. In addition, because the piston chamber 116 can be isolated from the hydrant chamber 104, the pressure in the hydrant chamber 104 is negligible. The piston 114 can remain in the closed position because of the equalized pressure exerted in the piston chamber 116 and the opposing pressure exerted at the inlet end 106 (see arrows).

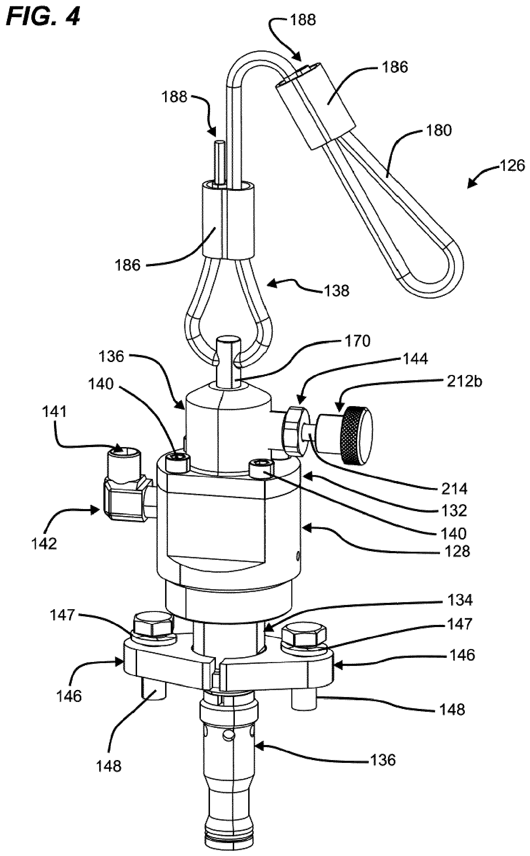

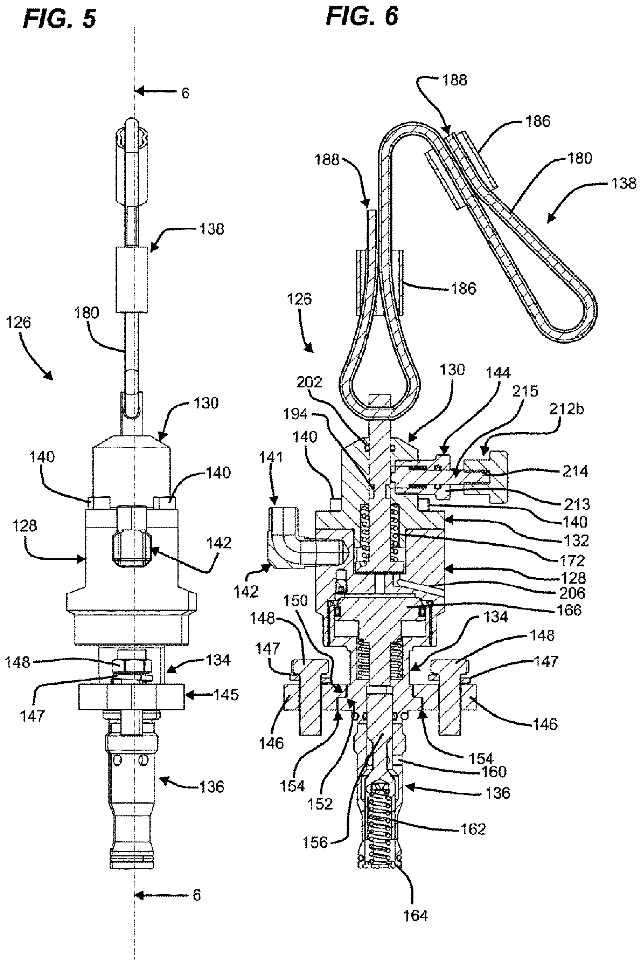

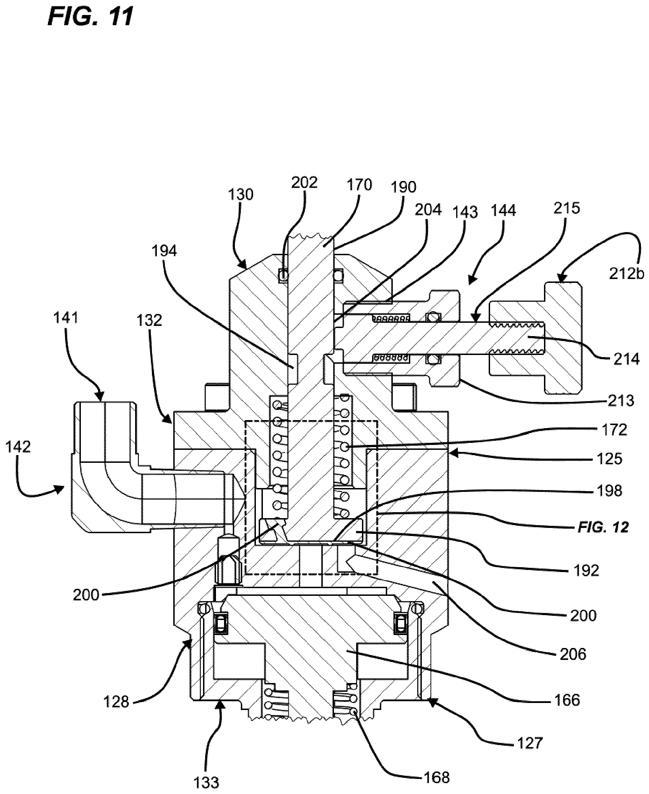

Turning to FIGS. 4-6, multiple views of the Z-pilot valve assembly 126 are depicted. The Z-pilot valve assembly 126 includes a connector body 128, a collar 130 with a connector flange 132, an actuator body 134, a pilot valve 136 and a lanyard 138. The collar 130 can be mechanically attached to a distal end 125 (see FIG. 11) of the connector body 128 via the connector flange 132 using fasteners 140. A mating portion 133 (see FIG. 11) of the actuator body 134 can be mounted to the connector body 128 at a proximal end 127 (see FIG. 11) of the connector body 128. In certain examples, the actuator body 134 and the connector body 128 are formed together as one single piece, although alternatives are possible.

A pressure supply adapter 142 in the form of an elbow can be provided on the connector body 128 to connect a source of pressure medium, i.e., pneumatic, or hydraulic fluid. During normal operation, a minimum of 2,41 bar (35 psi) air pressure can be supplied through an inlet 141 of the pressure supply adapter 142. The Z-pilot valve assembly 126 can also include a reset mechanism 144 (e.g., reset pin) that can be manually operated to reset the system. The reset mechanism 144 may be mounted within an opening 143 (see FIG. 11) defined in the collar 130 of the Z-pilot valve assembly 126.

The Z-pilot valve assembly 126 can be mechanically secured to the hydrant pit valve 100 via one or more mounting plates 146 and fasteners 148 that may optionally include washers 147. In the example depicted, two mating plates 146 are provided, although alternatives are possible. Each one of the mounting plates 146 may have a mating structure 150 configured to mate with a corresponding mating structure 152 on the actuator body 134 to provide a mating interface 154. In certain examples, the mating interface 154 may provide an interference or friction fit connection. In certain examples, the fasteners 148 may be nylon insert bolts to help prevent rotation of the mounting plates 146, although alternatives are possible. In some examples, the fasteners 148 include a hex bolt. In other examples, the fasteners 148 include socket head cap screws.

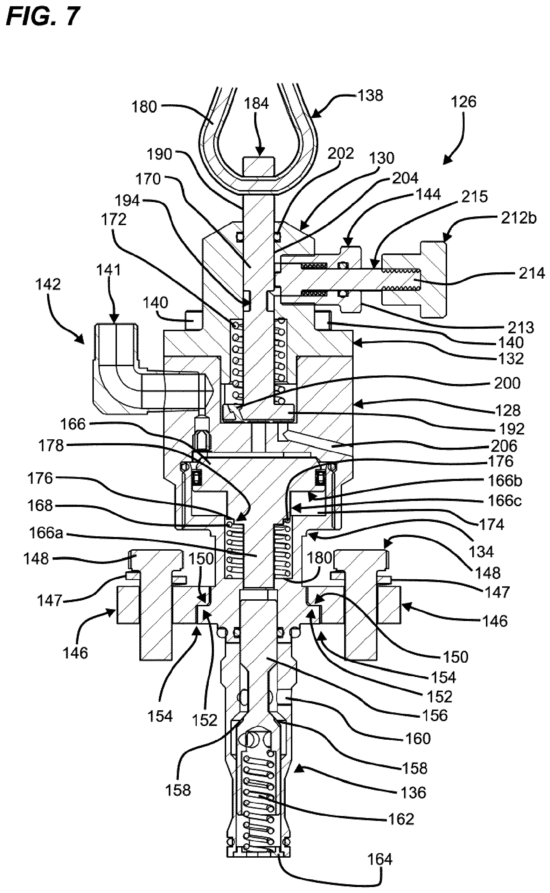

Turning to FIG. 7, the pilot valve 136 can be disposed between the hydrant chamber 104 and the piston chamber 118 thereby blocking communication between the two chambers when the pilot valve 136 is in a closed position. The pilot valve 136 includes a pilot valve stem 156, a pilot valve seat 158, a pilot valve opening(s) 160 adjacent the pilot valve seat 158, a pilot valve return spring 162, and a pilot valve spring retainer 164. The pilot valve return spring 162 biases the pilot valve stem 156 in a closed position against the pilot valve seat 158. When the pilot valve stem 156 is positioned against the pilot valve seat 158, fluid flow through the pilot valve opening(s) 160 can be obstructed. When the pilot valve stem 156 is moved away from the pilot valve seat 158, the pilot valve 136 is disposed in an open position permitting the flow of fuel from the piston chamber 118 to the hydrant chamber 104 through the pilot valve opening(s) 160.

The Z-pilot valve assembly 126 further includes a piston actuator 166 and a piston actuator return spring 168 housed within the actuator body 134. The Z-pilot valve assembly 126 also includes a spring-loaded actuator poppet 170 (e.g., plunger) and an actuator poppet spring 172. The piston actuator 166 is a non-detachable actuator (i.e., will remain secured to a pit valve). The piston actuator 166 can be sealed to prevent the transfer of pressure medium from the piston actuator 166 to the pilot valve 136. The piston actuator 166 may have a generally T-shaped cross-section, although other shapes are possible that provide the same functions and results. The piston actuator 166 has a rod section 166a and a t-shaped section 166b that extends from two sides of the rod section 166a. A neck section 166c of the piston actuator 166 generally extends between the t-shaped section 166b and the rod section 166c. The piston actuator return spring 168 is coiled about the rod section 166a of the piston actuator 166.

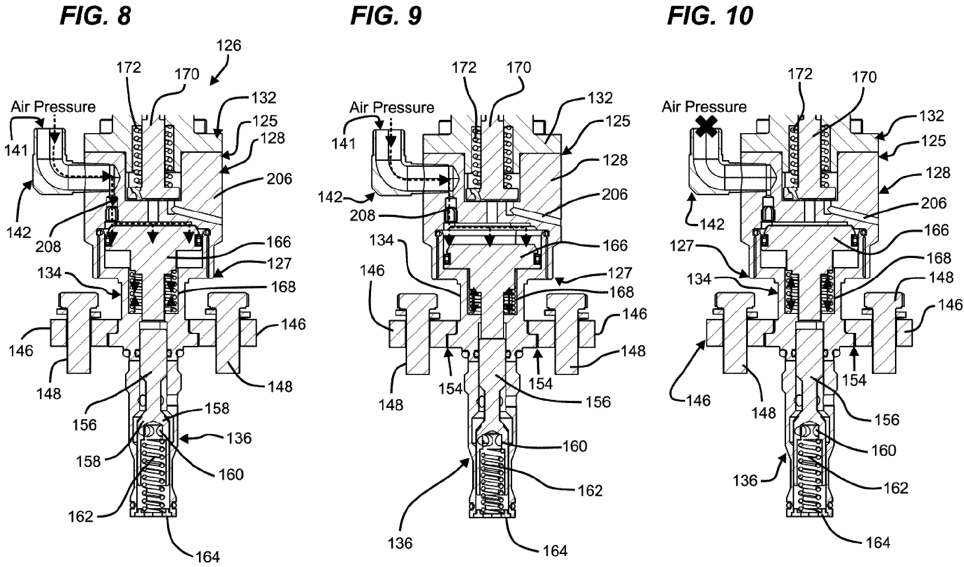

The actuator body 134 defines a cavity 174 that generally has a corresponding cross-sectional t-shape to receive the piston actuator 166. Spring stops 176 are defined at a step portion 178 of the neck section 166c and at a closed bottom 180 of the cavity 174. The piston actuator 166 is movable between an extended or open position (see FIG. 9) and a retracted or closed position (see FIG. 7) within the cavity 174 of the actuator body 134. The piston actuator return spring 168 is configured to bias the piston actuator 166 in the retracted or closed position. That is, in the absence of a pressure supply, the piston actuator return spring 168 biases the piston actuator 166 in a closed position.

FIGS. 8-10 illustrate a process of introducing a pressure medium through the pressure supply adapter 142. When the pressure medium is introduced, a force can be exerted on the piston actuator 166 to move the piston actuator 166 to an extended or open position (see FIG. 9) against the biasing force of the piston actuator return spring 168. When the piston actuator 166 is in the extended position, it engages the pilot valve stem 156 thereby moving the pilot valve 136 into an open position. That is, the piston actuator 166 provides actuating force to the pilot valve stem 156 to open the pilot valve stem 156 and move the pilot valve stem 156 away from the pilot valve seat 158 permitting the flow of fuel from the piston chamber 116 to the hydrant chamber 104 through the pilot valve opening(s) 160. In this way, fuel is permitted to move from the inlet end 106 through the hydrant chamber 104 to the outlet end 108. When the pressure medium is not supplied, as depicted in FIG. 10, the piston actuator return spring 168 will bring the piston actuator 166 back to its original position to close the pilot valve stem 156 and the pilot valve return spring 162 again biases the pilot valve stem 156 against the pilot valve seat 158 closing the pilot valve 136 and the hydrant pit valve 100.

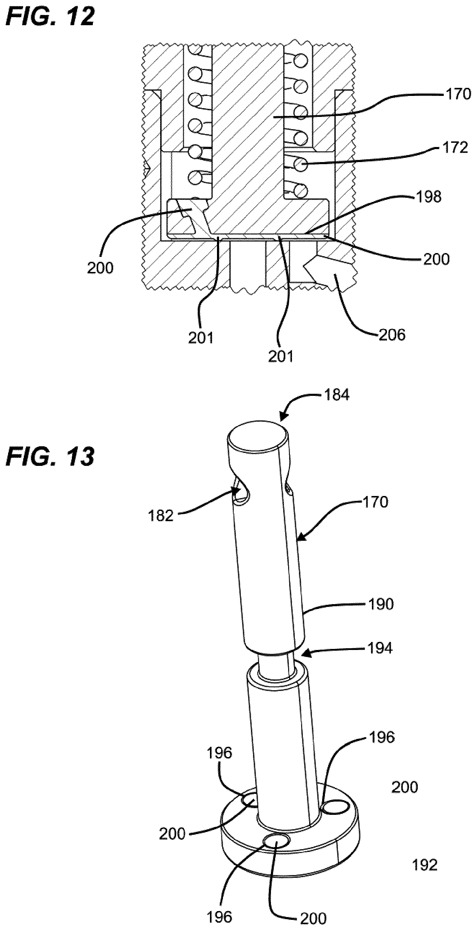

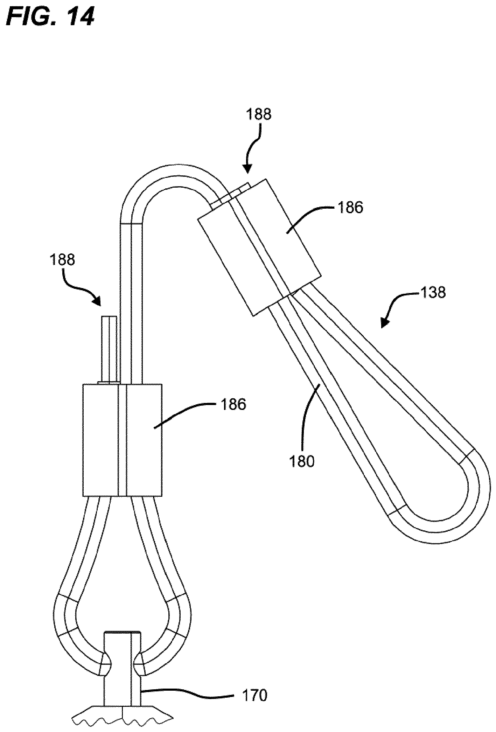

FIGS. 11-14 will be used to describe the deactuation mechanism of the Z-pilot valve assembly 126.

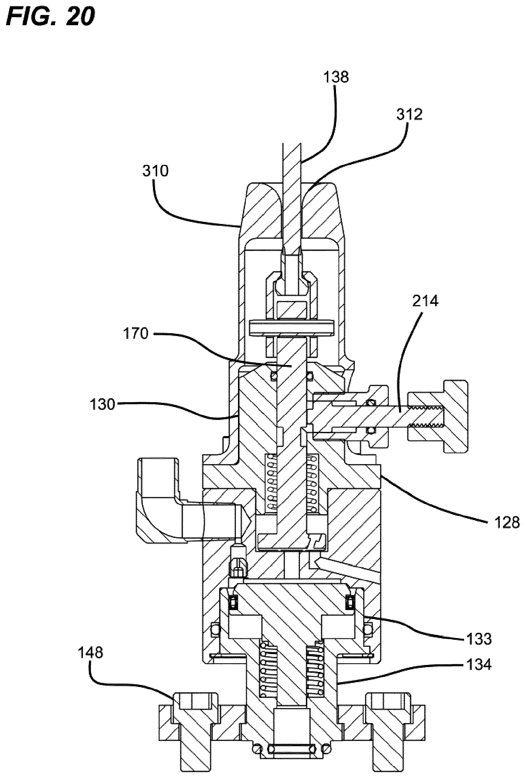

The lanyard 138 includes a cable 180 that can be looped through an opening 182 defined in the spring-loaded actuator poppet 170 adjacent a distal end 184 thereof. Sleeves 186 can be used to secure ends 188 of the cable 180 by a crimping method, although alternatives are possible. As shown in FIG. 20, a cover 310 can be mounted to the connector 128 to cover the secured ends 188 of the cable 180. In certain implementations, the cover 310 extends over all or a portion of the collar 130. In certain examples, the cover 310 can be fastened or otherwise secured to the connector body 128 through the collar 130. The cover 310 defines a guide surface 312 along which the cable 180 extends out of the cover 310. In certain examples, the guide surface 312 has a funnel or trumpet shape.

The spring-loaded actuator poppet 170 includes a main body portion 190, a head portion 192 and a recess 194 (e.g., cutout) defined in the main body portion 190. The spring-loaded actuator poppet 170 can be formed from a mold and include a plurality of holes 196 in the head portion 192. The main body portion 190 and the head portion 192 can be formed as one-piece, single body.

An end face 198 of the head portion 192 of the spring-loaded actuator poppet 170 can be provided with a seal member 200 and the seal member 200 can also be disposed within the holes 196 of the head portion 192. The advantageous feature of having the seal member 200 formed in the holes 196 of the head portion 192 is to add structural integrity to eliminate the risk of delamination of the seal member 200 from the end face 198. That is, the seal member 200 in the holes 196 provides an interlock feature to hold the seal rigidly to eliminate delamination from the end face 198 of the head portion 192.

An O-ring 202 can be used to seal the spring-loaded actuator poppet 170 from an opposite top side. The O-ring 202 can help to prevent dust, debris, and/or water from entering into a sliding location 204 defined in the collar 130 where the spring-loaded actuator poppet 170 is slidably movable and/or into the connector body 128.

Actuating pressure can be vented through a vent hole 206 defined in the connector body 128. In the example depicted, the vent hole 204 is configured to help avoid accumulation of dust, water and/or debris. The vent hole 206 and the inlet 141 are both sealed by the seal member 200 of the spring-loaded actuator poppet 170.

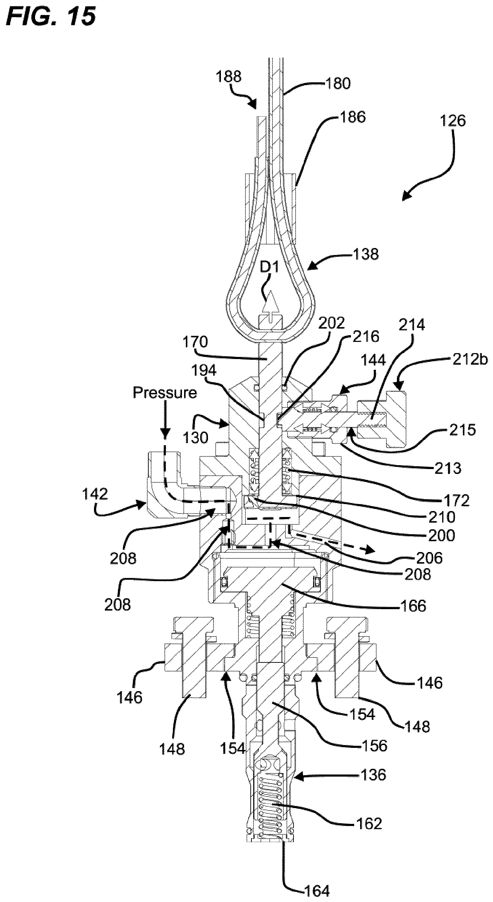

Turning to FIGS. 15-16, the lanyard 138 is designed to provide a deactuation mechanism in case of emergency. When the lanyard 138 is pulled in the first direction Di, the spring-loaded actuator poppet 170 is lifted against the bias of the actuator poppet spring 172 allowing air pressure to pass through connector body flow passages 208 and vent through the vent hole 204 out into the atmosphere such that the hydrant pit valve 100 closes.

The collar 130 has a mechanical stop 210 that limits the range of motion of the spring-loaded actuator poppet 170 when lifted by the lanyard 138. The spring-loaded actuator poppet 170 can be pulled by the lanyard 138 until the reset mechanism 144 engages the recess 194 of the spring-loaded actuator poppet 170.

The reset mechanism 144 may include a split pin 212a or knob 212b that is attached to a rest pin 214. In certain examples, the split pin 212 can be attached to the reset pin 214 via an opening of the reset pin 214. In certain examples, the knob 212b may be threadedly attached (see 214a) to the reset pin 214. In the example depicted, the reset pin 214 is configured in a horizontal position, which is advantageous in reducing the overall length of the Z-pilot valve assembly 126. As such, excessive loads on the pilot valve stem 156 can be reduced.

The reset pin 214 can be a spring-loaded pin that is slidably movable within a housing 213 (see FIG. 11). The reset pin 214 includes a projection 216 that engages the spring-loaded actuator poppet. When the spring-loaded actuator poppet 170 is in a closed position thereby creating a seal for the vent hole 204 and the inlet 141, the reset pin 214 is in a first position as shown in FIG. 11 prior to pulling the lanyard 138. The projection 216 of the reset pin 214 can be biased against the main body portion 190 of the spring-loaded actuator poppet 170. When the lanyard 138 is pulled, the spring-loaded actuator poppet 170 can be biased against the actuator poppet spring 172. The spring-loaded actuator poppet 170 can be lifted to allow the projection 216 to pop into the recess 194 of the spring-loaded actuator poppet 170 to restrict the motion of the spring-loaded actuator poppet 170. The reset pin 214 is then locked in the recess 194 in a second position (see FIG. 15) until the reset mechanism 144 is reset. The head portion 192 can engage the mechanical stop 210 of the collar 130 to avoid adding excessive loading on the pin 214 when the lanyard 138 is pulled. Lack of air pressure on the pilot valve 136 can bias the piston actuator 166 against spring load to its retracted or closed position which closes the hydrant pit valve 100.

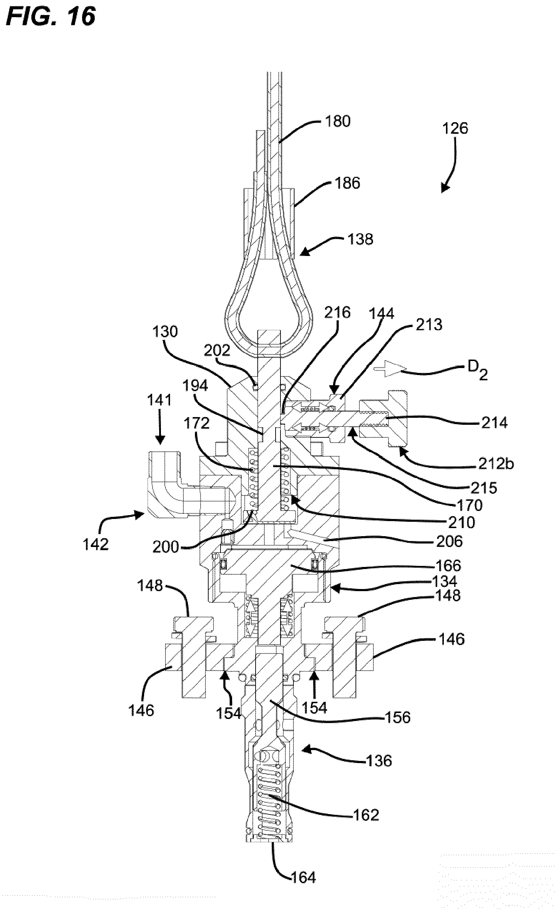

Turning to FIG. 16, the split pin 212a or knob 212b can be used to manually reset operation of the Z-pilot valve assembly 126. For example, the split pin 212a can be used to manually pull the reset pin 214 of the reset mechanism 144 in a second direction D₂ -to ready for its next use. The projection 216 of the reset pin 214 can be removed from the recess 194 to release the spring-loaded actuator poppet 170 which is allowed to close due to a spring load. The spring-loaded actuator poppet 170 seals and closes the vent hole 204 to allow for the next refueling operation.

In some examples, the reset pin 214 has a cylindrical shape. In other examples, the reset pin 214 has one or more radially outwardly facing flat surfaces 215. In certain examples, the reset pin 214 defines two oppositely facing flat surfaces 215. The one or more flat surfaces 215 enhance the ability of a tool such as a wrench gripping the reset pin 214 to facilitate assembly or disassembly of the knob 212b.

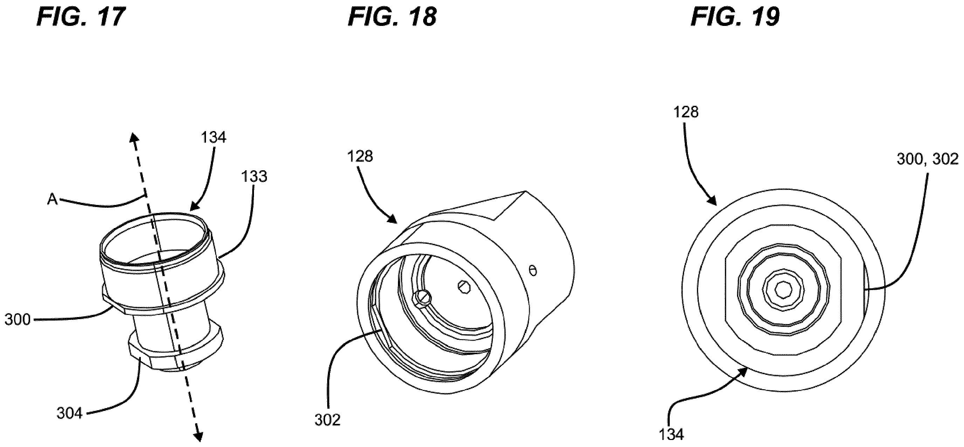

In some implementation, the actuator body 134 is threadably mounted to the connector body 128. In other implementations, however, the actuator body 134 is snap fit, friction fit, or otherwise secured to the connector body 128. Referring to FIGS. 17-19, the actuator body 134 and the connector body 128 are configured to inhibit relative rotation along a longitudinal axis A of the actuator body 134. In certain implementations, the actuator body 134 and connector body 128 each define one or more flat surfaces that abut each other to inhibit rotation.

For example, as shown in FIG. 17, the actuator body 134 (e.g., the mating portion 133 of the actuator body 134) includes a radially outwardly facing flat surface 300 and the connector body 128 defines a radially inwardly-facing flat surface 302. When the actuator body 134 is mounted at the connector 128, the outwardly facing flat surface 300 contacts the inwardly-facing flat surface 302 to inhibit the actuator body 134 from rotating about the axis A relative to the connector 128. In some examples, the actuator body 134 and connector body 128 include only a single flat surface 300, 302 each so that the actuator body 134 can be mounted at the connector body 128 in only one rotational position. In other examples, however, one or both of the actuator body 134 and the connector body 128 may include multiple flat surfaces to enable mounting in various rotational positions, but to retain in a single rotational position once mounted.

In certain implementations, the actuator body 134 also is configured to inhibit rotation relative to the mounting plate 146. For example, as shown in FIG. 17, the actuator body 134 may include a second set of one or more flat surfaces 304 configured to align with one or more flat surfaces defined by the mounting plate 146. In certain examples, the flat surfaces 304 are spaced from the flat surface 302 along the axis A of the actuator body 134. In certain examples, the flat surfaces 304 are radially spaced from the flat surface 302. In the example shown, the actuator body 134 defines a single flat surface 302 to engage with the connector body 128 and multiple flat surfaces 304 to engage with the mounting plate 146.

The principles, techniques, and features described herein can be applied in a variety of systems, and there is no requirement that all of the advantageous features identified be incorporated in an assembly, system or component to obtain some benefit according to the present disclosure.

From the forgoing detailed description, it will be evident that modifications and variations can be made without departing from the scope of the disclosure as defined by the appended claims.

## Claims

1. A pilot valve assembly (126) for use with a hydrant pit valve (100), valve, the pilot valve assembly being configured to be mounted to the hydrant pit valve, the pilot valve assembly comprising
a collar (130) having a main body and a flange portion (132), the main body defining an opening;
a connector body (128) having a distal end attached to the collar and a proximal end, the connector body defining a vent hole (206) for venting fluid flow;
a spring-loaded actuator poppet (170) being movable between a closed position and an open position, the spring-loaded actuator poppet having a body portion (190) slidably movable within the collar and a head portion (192) slidably movable within the connector body, the spring-loaded actuator poppet defining a recess (194) about the body portion;
a seal member (200) being disposed on an end face of the head portion;
a lanyard (138) secured to the body portion of the spring-loaded actuator poppet at a securement location to enable pulling of the spring-loaded actuator poppet against a bias of an actuator poppet spring (172);
a spring-loaded reset pin (214) mounted within the opening of the collar (130), the spring-loaded reset pin having a projection configured to engage the recess (194) of the spring-loaded actuator poppet (170) when the spring-loaded actuator poppet is moved to the open position;
wherein, when the spring-loaded actuator poppet (170) is in the closed position, the seal member (200) is configured to seal the vent hole.

2. The pilot valve assembly of claim 1, wherein the collar defines a mechanical stop so that when the spring-loaded actuator poppet is in the open position, the head portion of the spring-loaded actuator poppet engages a mechanical stop.

3. The pilot valve assembly of claim 1, wherein movement of the spring-loaded reset pin is transverse to movement of the spring-loaded actuator poppet.

4. The pilot valve assembly of claim 1, wherein the vent hole is slanted relative to movement of the spring-loaded actuator poppet.

5. The pilot valve assembly of claim 1, further comprising:
a pilot valve including a pilot valve stem and a pilot valve return spring to bias the pilot valve stem in a closed position against a pilot valve seat to block fluid flow in the hydrant pit valve; and
a piston actuator connected to the pilot valve for opening the pilot valve, the piston actuator being housed within a piston actuator body, the piston actuator being biased to a retracted position by a piston actuator return spring, the piston actuator being moved against the bias of the piston actuator return spring to an extended position when fluid flow is supplied through the connector body, the piston actuator pressing against the pilot valve stem when in the extended position to move the pilot valve to an open position to allow fluid flow through the hydrant pit valve.

6. The pilot valve assembly of claim 1, wherein the seal member is a molded type seal which is molded on the spring-loaded actuator poppet.

7. The pilot valve assembly of claim 6, wherein the spring-loaded actuator poppet is formed from a metallic material.

8. The pilot valve assembly of claim 7, wherein the metallic material is stainless steel.

9. The pilot valve assembly of claim 1, wherein the end face of the head portion of the spring-loaded actuator poppet defines a plurality of holes; and wherein the seal member is disposed within the holes.

10. The pilot valve assembly of claim 1, wherein the lanyard includes a cable looped through an opening defined in the spring-loaded actuator poppet, wherein ends of the cable are secured with a sleeve by crimping.

11. The pilot valve assembly of claim 1, wherein the spring-loaded reset pin defines outwardly facing flat surfaces.

12. The pilot valve assembly of claim 5, wherein a first end of the piston actuator body is non-rotatably mounted to the connector body.

13. The pilot valve assembly of claim 12, wherein an opposite second end of the piston actuator body is non-rotatably mounted to one or more mounting plates.

14. The pilot valve assembly of claim 1, wherein a cover mounts over the collar to enclose the securement location.

15. The pilot valve assembly of claim 14, wherein the cover defines a trumpet shaped passage through which the lanyard extends out of the cover.

## Patentansprüche

1. Eine Vorsteuerventilanordnung (126) für eine Verwendung mit einem Hydrantschachtventil (100),
wobei die Vorsteuerventilanordnung konfiguriert ist, um an dem Hydrantschachtventil montiert zu werden, die Vorsteuerventilanordnung umfassend eine Manschette (130), die einen Hauptkörper und einem Flanschabschnitt (132) aufweist, wobei der Hauptkörper eine Öffnung definiert;
einen Verbinderkörper (128), der ein distales Ende aufweist, das an der Manschette angebracht ist, wobei der Verbinderkörper ein Entlüftungsloch (206) für einen Entlüftungsfluidstrom definiert;
einen federbelasteten Aktuatorkolben (170), der zwischen einer geschlossenen Position und einer offenen Position bewegbar ist, wobei der federbelastete Aktuatorkolben einen Körperabschnitt (190) aufweist, der innerhalb der Manschette verschiebbar beweglich ist, und einen Kopfabschnitt (192), der innerhalb des Verbinderkörpers verschiebbar beweglich ist, wobei der federbelastete Aktuatorkolben eine Aussparung (194) um den Körperabschnitt definiert;
ein Dichtungselement (200), das an einer Endfläche des Kopfabschnitts eingerichtet ist;
eine Abzugsleine (138), die an dem Körperabschnitt des federbelasteten Aktuatorkolbens an einer Befestigungsstelle befestigt ist, um ein Ziehen des federbelasteten Aktuatorkolbens gegen eine Vorspannung einer Aktuatorkolbenfeder (172) zu ermöglichen;
einen federbelasteten Rücksetzstift (214), der innerhalb der Öffnung der Manschette (130) montiert ist, wobei der federbelastete Rücksetzstift einen Vorsprung aufweist, der konfiguriert ist, um in die Aussparung (194) des federbelasteten Aktuatorkolbens (170) einzugreifen, wenn der federbelastete Aktuatorkolben in die offene Position bewegt wird;
wobei, wenn der federbelastete Aktuatorkolben (170) in der geschlossenen Position ist, das Dichtungselement (200) konfiguriert ist, um das Entlüftungsloch abzudichten.

2. Vorsteuerventilanordnung nach Anspruch 1, wobei die Manschette einen mechanischen Anschlag definiert, sodass, wenn der federbelastete Aktuatorkolben in der offenen Position ist, der Kopfabschnitt des federbelasteten Aktuatorkolbens in einen mechanischen Anschlag eingreift.

3. Vorsteuerventilanordnung nach Anspruch 1, wobei die Bewegung des federbelasteten Rücksetzstifts quer zu einer Bewegung des federbelasteten Aktuatorkolbens verläuft.

4. Vorsteuerventilanordnung nach Anspruch 1, wobei das Entlüftungsloch relativ zu der Bewegung des federbelasteten Aktuatorkolbens geneigt ist.

5. Vorsteuerventilanordnung nach Anspruch 1, ferner umfassend:
ein Vorsteuerventil, einschließlich eines Vorsteuerventilschafts und einer Vorsteuerventilrückstellfeder, um den Vorsteuerventilschaft in einer geschlossenen Position gegen einen Vorsteuerventilsitz vorzuspannen, um den Fluidstrom in dem Hydrantschachtventil zu blockieren; und
einen Kolbenaktuator, der mit dem Vorsteuerventil zum Öffnen des Vorsteuerventils verbunden ist, wobei der Kolbenaktuator innerhalb eines Kolbenaktuatorkörpers untergebracht ist, wobei der Kolbenaktuator durch eine Kolbenaktuatorrückstellfeder in eine zurückgezogene Position vorgespannt ist, wobei der Kolbenaktuator gegen die Vorspannung der Kolbenaktuatorrückstellfeder in eine ausgefahrene Position bewegt wird, wenn ein Fluidstrom durch den Verbinderkörper zugeführt wird, wobei der Kolbenaktuator gegen den Vorsteuerventilschaft drückt, wenn er in der ausgefahrenen Position ist, um das Vorsteuerventil in eine offene Position zu bewegen, um den Fluidstrom durch das Hydrantschachtventil zu ermöglichen.

6. Vorsteuerventilanordnung nach Anspruch 1, wobei das Dichtungselement eine geformte Art von Dichtung ist, die an dem federbelasteten Aktuatorkolben angeformt ist.

7. Vorsteuerventilanordnung nach Anspruch 6, wobei der federbelastete Aktuatorkolben aus einem metallischen Material gebildet ist.

8. Vorsteuerventilanordnung nach Anspruch 7, wobei das metallische Material Edelstahl ist.

9. Vorsteuerventilanordnung nach Anspruch 1, wobei die Endfläche des Kopfabschnitts des federbelasteten Aktuatorkolbens eine Vielzahl von Löchern definiert; und wobei das Dichtungselement innerhalb der Löcher eingerichtet ist.

10. Vorsteuerventilanordnung nach Anspruch 1, wobei die Abzugsleine ein Kabel einschließt, das durch eine Öffnung geschlungen ist, die in dem federbelasteten Aktuatorkolben definiert ist, wobei Enden des Kabels durch Crimpen mit einer Hülse befestigt sind.

11. Vorsteuerventilanordnung nach Anspruch 1, wobei der federbelastete Rücksetzstift nach außen weisende flache Oberflächen definiert.

12. Vorsteuerventilanordnung nach Anspruch 5, wobei ein erstes Ende des Kolbenaktuatorkörpers an dem Verbinderkörper drehfest montiert ist.

13. Vorsteuerventilanordnung nach Anspruch 12, wobei ein gegenüberliegendes zweites Ende des Kolbenbetätigungskörpers an einer oder mehreren Montageplatten drehfest montiert ist.

14. Vorsteuerventilanordnung nach Anspruch 1, wobei eine Abdeckung über der Manschette montiert ist, um die Befestigungsstelle zu umschließen.

15. Vorsteuerventilanordnung nach Anspruch 14, wobei die Abdeckung einen trompetenförmigen Durchgang definiert, durch den sich die Abzugsleine aus der Abdeckung heraus erstreckt.

## Revendications

1. Ensemble vanne pilote (126) pour une utilisation avec une vanne d'oléoprise (100),
l'ensemble vanne pilote étant conçu pour être monté sur la vanne d'oléoprise, l'ensemble vanne pilote comprenant un collier (130) ayant un corps principal et une partie de bride (132), le corps principal définissant une ouverture ;
un corps de raccord (128) ayant une extrémité distale attachée au collier et une extrémité proximale, le corps de raccord définissant un évent (206) permettant d'évacuer un écoulement de fluide ;
un champignon d'actionneur à ressort (170) mobile entre une position fermée et une position ouverte, le champignon d'actionneur à ressort ayant une partie de corps (190) mobile de manière coulissante à l'intérieur du collier et une partie de tête (192) mobile de manière coulissante à l'intérieur du corps de raccord, le champignon d'actionneur à ressort définissant un évidement (194) autour de la partie de corps ;
un élément d'étanchéité (200) disposé sur une face d'extrémité de la partie de tête ;
un cordon (138) fixé à la partie de corps du champignon d'actionneur à ressort au niveau d'un emplacement de fixation afin de permettre la traction du champignon d'actionneur à ressort contre une sollicitation d'un ressort de champignon d'actionneur (172) ;
une broche de réinitialisation à ressort (214) montée à l'intérieur de l'ouverture du collier (130), la broche de réinitialisation à ressort ayant une saillie conçue pour mettre en prise l'évidement (194) du champignon d'actionneur à ressort (170) lorsque le champignon d'actionneur à ressort est déplacé vers la position ouverte ;
dans lequel, lorsque le champignon d'actionneur à ressort (170) est dans la position fermée, l'élément d'étanchéité (200) est conçu pour sceller l'évent.

2. Ensemble vanne pilote selon la revendication 1, dans lequel le collier définit un arrêt mécanique de sorte que lorsque le champignon d'actionneur à ressort est dans la position ouverte, la partie de tête du champignon d'actionneur à ressort met en prise un arrêt mécanique.

3. Ensemble vanne pilote selon la revendication 1, dans lequel un mouvement de la broche de réinitialisation à ressort est transversal par rapport au mouvement du champignon d'actionneur à ressort.

4. Ensemble vanne pilote selon la revendication 1, dans lequel l'évent est incliné par rapport au mouvement du champignon d'actionneur à ressort.

5. Ensemble vanne pilote selon la revendication 1, comprenant en outre :
un vanne pilote comportant une tige de vanne pilote et un ressort de rappel de vanne pilote permettant de solliciter la tige de vanne pilote dans une position fermée contre un siège de vanne pilote afin de bloquer l'écoulement de fluide dans la vanne d'oléoprise ; et
un actionneur à piston connecté à la vanne pilote pour ouvrir la vanne pilote, l'actionneur à piston étant logé à l'intérieur d'un corps d'actionneur à piston, l'actionneur à piston étant sollicité dans une position rétractée par un ressort de rappel d'actionneur à piston, l'actionneur à piston étant déplacé contre la sollicitation du ressort de rappel d'actionneur à piston vers une position étendue lorsque l'écoulement de fluide est fourni à travers le corps de raccord, l'actionneur à piston pressant contre la tige de vanne pilote lorsqu'il est dans la position étendue afin de déplacer la vanne pilote dans une position ouverte de manière à permettre l'écoulement de fluide à travers la vanne d'oléoprise.

6. Ensemble vanne pilote selon la revendication 1, dans lequel l'élément d'étanchéité est un joint de type moulé qui est moulé sur le champignon d'actionneur à ressort.

7. Ensemble vanne pilote selon la revendication 6, dans lequel le champignon d'actionneur à ressort est formé d'un matériau métallique.

8. Ensemble vanne pilote selon la revendication 7, dans lequel le matériau métallique est l'acier inoxydable.

9. Ensemble vanne pilote selon la revendication 1, dans lequel la face d'extrémité de la partie de tête du champignon d'actionneur à ressort définit une pluralité de trous, et dans lequel l'élément d'étanchéité est disposé à l'intérieur des trous.

10. Ensemble vanne pilote selon la revendication 1, dans lequel le cordon comporte un câble bouclé à travers une ouverture définie dans le champignon d'actionneur à ressort, dans lequel des extrémités du câble sont fixées avec un manchon par sertissage.

11. Ensemble vanne pilote selon la revendication 1, dans lequel la broche de réinitialisation à ressort définit des surfaces plates tournées vers l'extérieur.

12. Ensemble vanne pilote selon la revendication 5, dans lequel une première extrémité du corps d'actionneur à piston est montée de manière non rotative sur le corps de raccord.

13. Ensemble vanne pilote selon la revendication 12, dans lequel une seconde extrémité opposée du corps d'actionneur à piston est montée de manière non rotative sur une ou plusieurs plaques de montage.

14. Ensemble vanne pilote selon la revendication 1, dans lequel un couvercle est monté sur le collier afin d'enfermer l'emplacement de fixation.

15. Ensemble vanne pilote selon la revendication 14, dans lequel le couvercle définit un passage en forme de trompette à travers lequel le cordon s'étend hors du couvercle.
